# EUROPÄISCHE PATENTSCHRIFT

(11) **EP 4 609 502 B1**
(45) Veröffentlichungstag und Bekanntmachung des Hinweises auf die Patenterteilung: **07.10.2026**
(21) Anmeldenummer: 23768133.3
(22) Anmeldetag: 30.08.2023
(51) Int. Cl.: B62D 5/04, H02P 25/22, H02P 21/00, B62D 5/00

(54) **REGELUNG EINER ELEKTRISCHEN MASCHINE MIT ZWEI GETRENNTEN WICKLUNGSSYSTEMEN UND BETRIEB EINES AKTUATORS EINES STEER-BY-WIRE-SYSTEMS**
CONTROLLING AN ELECTRIC MACHINE WITH TWO SEPARATE WINDING SYSTEMS, AND OPERATING AN ACTUATOR OF A STEER-BY-WIRE SYSTEM
COMMANDE D'UNE MACHINE ÉLECTRIQUE À DEUX SYSTÈMES D'ENROULEMENT SÉPARÉS, ET ACTIONNEMENT D'UN ACTIONNEUR D'UN SYSTÈME DE DIRECTION À COMMANDE ÉLECTRIQUE

(30) Priorität: 27.10.2022 DE 102022128460
(43) Veröffentlichungstag der Anmeldung: 03.09.2025
(73) Patentinhaber: Schaeffler Technologies AG & Co. KG, 91074 Herzogenaurach (DE)
(72) Erfinder: ABOU AL FADEL, Tamam, 91058 Erlangen (DE)
(74) Vertreter: Schaeffler Technologies
(86) Internationale Anmeldenummer: PCT/DE2023/100627
(87) Internationale Veröffentlichungsnummer: WO 2024/088457

(56) Entgegenhaltungen:
- CN-A- 114 553 098
- CN-A- 114 954 629
- US-A1- 2016 221 602
- PEREZ-PINAL F J ET AL: "Comparison of multi-motor synchronization techniques", IECON 2004 - 30TH ANNUAL CONFERENCE OF IEEE INDUSTRIAL ELECTRONICS SOCIETY (IEEE CAT. NO.04CH37609)2004IEEEPISCATAWAY, NJ, USA, PISCATAWAY, NJ : IEEE SERVICE CENTER, US, vol. 2, 2 November 2004 (2004-11-02), pages 1670 - 1675, XP010798991, ISBN: 978-0-7803-8730-0, DOI: 10.1109/IECON.2004.1431832

## Beschreibung

Die Erfindung betrifft Verfahren zur Regelung der Lage eines Rotors einer elektrischen Maschine mit mindestens zwei getrennten Wicklungssystemen. Ferner betrifft die Erfindung ein Verfahren zum Betrieb eines Aktuators eines Steer-By-Wire-Systems, insbesondere eines Feedback-Aktuators oder eines Lenk-Aktuators, der eine elektrischen Maschine mit mindestens zwei getrennten Wicklungssystemen umfasst. Weiter betrifft die Erfindung eine Vorrichtung zur Regelung der Lage eines Rotors einer elektrischen Maschine mit mindestens zwei getrennten Wicklungssystemen.

Elektrische Maschinen mit getrennten Wicklungssystemen werden typischerweise in solchen Anwendungen eingesetzt, die besonders hohe Anforderungen an die Betriebssicherheit und Verfügbarkeit haben, wie beispielsweise Steer-by-Wire-Systeme für Kraftfahrzeuge. Bei derartigen Steer-by-Wire-Systemen handelt es sich um Lenksystemen mit einem elektrischen Aktuator, dem Lenkbefehle ausschließlich auf elektronischem Weg übermittelt werden.

Zur Ansteuerung von elektrischen Maschinen mit getrennten Wicklungssystemen ist es aus der Dissertation "J.W. Bennett. Fault Tolerant Electromechanical Actuators for Aircraft. PhD Thesis. Newcastle University, 2010" bekannt, jedes der Wicklungssysteme durch eine dem jeweiligen Wicklungssystem zugeordnete Kaskadenregelung zu regeln. Die Kaskadenregelungen umfassen dabei einen inneren Strom-Regelkreis, der einen Strom der elektrischen Maschine regelt, einen dem inneren Strom-Regelkreis übergeordneten mittleren Drehzahl-Regelkreis, der eine Drehzahl der elektrischen Maschine regelt, und einen dem mittleren Drehzahl-Regelkreis übergeordneten äußeren Lage-Regelkreis, der die Lage des Rotors der elektrischen Maschine bzw. die Lage eines mit dem Rotor gekoppelten Aktorelements regelt. CN114954629A offenbart ein redundantes adaptives Regelsystem.

Bei einer derartigen elektrischen Maschine, bei der die beiden Wicklungssysteme dieselbe mechanische Achse antreiben, ergeben sich typischerweise schon bei einer geringen Abweichung des Regelverhaltens der beiden Kaskadenregelungen größere Unterschiede bei den eingestellten Strömen und Drehmomenten, die an der gemeinsamen Achse angreifen. Hierbei können gegeneinander wirkende Drehmomente (so genanntes "torque fighting") entstehen, welches die Stabilität der Regelung der elektrischen Maschine negativ beeinflusst, so dass das Gesamtsystem nicht mehr funktionsfähig ist. Die oben genannte Dissertation schlägt zur Abhilfe einen kontinuierlichen Abgleich der beiden Kaskadenreglungen vor, bei welchem die Ausgänge der Regler der jeweiligen Drehzahl-Reglungskreise addiert werden. Diese Summe wird halbiert und den Strom-Regelkreisen beider Kaskadenregelungen zugeführt.

Ein Verfahren zur Regelung der Lage eines Rotors einer elektrischen Maschine mit mindestens zwei getrennten Wicklungssystemen in einem Lenksystem ist aus DE 10 2020 207 196 A1 bekannt. Die DE 10 2020 207 196 A1 schlägt zum Vermeiden gegeneinander wirkender Steuerungspfade vor, dass Stellgrößen der Regelungseinrichtungen gemittelt werden und eine Soll-Stellgröße durch jede Regelungseinrichtung abhängig von der gemittelten Stellgröße bereitgestellt wird. Diese Lösung kann zwar zu einer Reduktion des "torque fighting" führen, geht aber mit einer starken Kopplung der Regelungseinrichtungen einher. Dieser Datenaustausch widerspricht aber dem Gedanken, getrennte Wicklungssysteme vorzusehen, um Redundanz bereitzustellen, beispielsweise derart, dass bei Ausfall eines Wicklungssystems das andere Wicklungssystem den Betrieb der elektrischen Maschine, ggf. mit Einschränkungen, aufrechterhalten kann.

Vor diesem Hintergrund stellt sich die Aufgabe, eine größere Verfügbarkeit einer elektrischen Maschine mit getrennten Wicklungssystemen zu ermöglichen.

Die Aufgabe wird gelöst durch ein Verfahren zur Regelung der Lage eines Rotors einer elektrischen Maschine mit mindestens zwei getrennten Wicklungssystemen, wobei jedes der Wicklungssysteme durch eine dem jeweiligen Wicklungssystem zugeordnete Regelungseinrichtung geregelt wird, wobei jede der Regelungseinrichtungen einen Drehzahl-Regelkreis umfasst, der eine Drehzahl der elektrischen Maschine regelt, wobei der jeweilige Drehzahl-Regelkreis einen Drehzahl-Regler mit einem P-Anteil und einem I-Anteil aufweist und die Drehzahl-Regelkreise der Regelungseinrichtungen untereinander eine Information betreffend den I-Anteil austauschen, und betreffend den P-Anteil keine Information austauschen.

Unter einem P-Anteil des Drehzahl-Reglers wird ein Proportional-Anteil verstanden, also ein Anteil, der einem proportionalen Regler entspricht. Unter dem I-Anteil des Drehzahl-Reglers wird ein Integral-Anteil verstanden, also ein Anteil, der einem integrierenden Regler entspricht. Es hat sich herausgestellt, dass I-Anteile unerwünschtes "torque fighting" verursachen, da sie keine stationären Regelabweichungen tolerieren und immer bestrebt sind, solche Regelabweichungen auf null auszuregeln. P-Anteile hingegen tolerieren eine gewisse Regelabweichung zwischen dem Sollwert und dem Istwert. Bei dem erfindungsgemäßen Verfahren wird ein auf das Nötigste beschränkter Datenaustausch zwischen den Regelungseinrichtungen durchgeführt. Anders als bei dem System nach DE 10 2020 207 196 A1, sind die Regelungseinrichtungen weniger stark miteinander gekoppelt, da die Drehzahl-Regler der Regelungseinrichtungen untereinander ausschließlich Informationen betreffend den I-Anteil austauschen nicht aber betreffend den P-Anteil. Hierdurch wird es möglich, die elektrische Maschine bei einem Ausfall einer der Regelungseinrichten mit der oder den verbleibenden Regelungseinrichtung(en) weiter zu betreiben.

Unter der Lage des Rotors wird im Rahmen der vorliegenden Erfindung bevorzugt eine Winkelstellung des Rotors verstanden. Die Lage bzw. Winkelstellung des Rotors kann beispielsweise relativ zu einer Nulllage des Rotors angegeben werden, beispielsweise durch Angabe eines Winkels relativ zu der Nulllage.

Bevorzugt sind genau zwei getrennte Wicklungssysteme und genau zwei Regelungseinrichtungen vorgesehen.

Gemäß einer vorteilhaften Ausgestaltung der Erfindung ist vorgesehen, dass der P-Anteil und der I-Anteil des Drehzahl-Regelkreises parallel gebildet und dann addiert werden. Durch das parallele Bilden des P-Anteils und des I-Anteils ist es möglich, P-Anteil und I-Anteil unterschiedlichen Operationen zu unterziehen. Beispielsweise kann der P-Anteil unverändert der Addition zugeführt werden und der I-Anteil kann nach einer Operation unterzogen werden, die abhängig von dem I-Anteil eines I-Anteils des eines anderen oder der mehreren anderen Regelungseinrichtungen ist.

Gemäß einer vorteilhaften Ausgestaltung der Erfindung ist vorgesehen, dass in dem Drehzahl-Regelkreis eine Differenz der I-Anteile mehrerer Regelungseinrichtungen gebildet wird, wobei die Differenz als Rückkopplung des I-Anteils verwendet wird. Beispielsweise können genau zwei Regelungseinrichtungen vorgesehen sein und die es kann die Differenz der I-Anteile beider Regelungseinrichtungen gebildet werden. Durch die Bildung der Differenz kann verhindert werden, dass sich Unterschiede der I-Anteile der verschiedenen Regelungseinrichtungen, z. B. durch Toleranzen der Sensoren oder infolge unterschiedlicher Signallaufzeiten akkumulieren.

Gemäß einer alternativen vorteilhaften Ausgestaltung der Erfindung ist vorgesehen, dass in dem Drehzahl-Regelkreis ein (arithmetischer) Mittelwert der I-Anteile mehrerer Regelungseinrichtungen gebildet wird, wobei eine Differenz des I-Anteils des jeweiligen Drehzahl-Regelkreises minus des gebildeten Mittelwerts als Rückkopplung des I-Anteils verwendet wird. Beispielsweise können genau zwei Regelungseinrichtungen vorgesehen sein und es kann der Mittelwert der I-Anteile beider Regelungseinrichtungen gebildet werden. Zur Bildung der Differenz in der jeweiligen Regelungseinrichtung wird dann der gebildete Mittelwert von dem I-Anteil der Regelungseinrichtung subtrahiert. Die Bildung der Differenz anhand des Mittelwerts kann ein gegenüber der Bildung der Differenz der I-Anteile verbesserte Performance bieten und eignet sich insbesondere für Ausgestaltungen mit mehr als zwei getrennten Wicklungssystemen und Regelungseinrichtungen.

Gemäß einer vorteilhaften Ausgestaltung der Erfindung ist vorgesehen, dass jeder der Regelungseinrichtungen einen dem Drehzahl-Regelkreis übergeordneten Lage-Regelkreis umfasst, der die Lage des Rotors der elektrischen Maschine regelt. Der Lage-Regelkreis umfasst bevorzugt einen Lage-Regler, der als P-Regler ausgestaltet ist. Die Lage des Rotors kann abhängig sein von der Lage eines mit dem Rotor, beispielsweise über ein Getriebe, gekoppelten Aktorelements. Bei einer derartigen Ausgestaltung mit einem Aktorelement kann der dem Drehzahl-Regelkreis übergeordnete Lage-Regelkreis die Lage des mit dem Rotor der elektrischen Maschine gekoppelten Aktorelements regeln. In diesem Fall regelt das erfindungsgemäße Verfahren unmittelbar die Lage des Aktorelements und mittelbar die Lage des Rotors der elektrischen Maschine. Bevorzugt ist vorgesehen, dass den Lage-Regelkreisen der Regelungseinrichtungen ein identischer Lage-Sollwert zugeführt wird.

Gemäß einer vorteilhaften Ausgestaltung der Erfindung ist vorgesehen, dass jede der Regelungseinrichtungen einen Strom-Regelkreis umfasst, der einen Strom der elektrischen Maschine regelt. Bevorzugt ist vorgesehen, dass der Strom-Regelkreis den Strom durch eine Vektorregelung regelt. Eine solche Regelung kann auch als feldorientierte Regelung bezeichnet werden. Die Vektorregelung nutzt eine rotorbezogene Raumzeigerdarstellung mit zwei Komponenten, der d-Komponente und der q-Komponente. Hierbei werden die gemessenen Phasenströme in die rotorbezogene Raumzeigerdarstellung transformiert und als Rückführung einem geschlossenen Regelkreis für die d-Komponente und die q-Komponente zugeführt.

Insofern können die Regelungseinrichtungen jeweils eine Kaskadenregelung implementieren, mit
- einem inneren Strom-Regelkreis, der einen Strom der elektrischen Maschine regelt,
- einem dem inneren Strom-Regelkreis übergeordneten mittleren Drehzahl-Regelkreis, der eine Drehzahl der elektrischen Maschine regelt, und
- einem dem mittleren Drehzahl-Regelkreis übergeordneten äußeren Lage-Regelkreis, der die Lage des Rotors der elektrischen Maschine regelt.

Ein weiterer Gegenstand der Erfindung ist ein Verfahren zum Betrieb eines Aktuators eines Steer-By-Wire-Systems, insbesondere eines Feedback-Aktuators oder eines Lenk-Aktuators, der eine elektrischen Maschine mit mindestens zwei getrennten Wicklungssystemen umfasst, wobei eine Lage eines Rotors der elektrischen Maschine nach einem vorstehend erläuterten Verfahren eingestellt wird.

Bei dem Verfahren zum Betrieb des Aktuators können dieselben Vorteile erreicht werden wie sie im Zusammenhang mit dem erfindungsgemäßen Verfahren zur Regelung der Lage eines Rotors einer elektrischen Maschine mit mindestens zwei getrennten Wicklungssystemen beschrieben worden sind.

Gemäß einer vorteilhaften Ausgestaltung der Erfindung ist vorgesehen, dass die elektrische Maschine eine permanenterregte Synchronmaschine oder eine Reluktanzmaschine ist.

Ein weiterer Gegenstand der Erfindung ist eine Vorrichtung zur Regelung der Lage eines Rotors einer elektrischen Maschine mit mindestens zwei getrennten Wicklungssystemen, wobei jedes der Wicklungssysteme durch eine dem jeweiligen Wicklungssystem zugeordnete Regelungseinrichtung regelbar ist, wobei jede der Regelungseinrichtungen einen Drehzahl-Regelkreis umfasst, durch den eine Drehzahl der elektrischen Maschine regelbar ist, wobei der jeweilige Drehzahl-Regelkreis einen Drehzahl-Regler mit einem P-Anteil und einem I-Anteil aufweist und die Regelungseinrichtungen über eine Kommunikationsverbindung gekoppelt sind, die dazu eingerichtet ist, dass die Drehzahl-Regelkreise der Regelungseinrichtungen untereinander eine Information betreffend den I-Anteil austauschen, und betreffend den P-Anteil keine Information austauschen.

Bei der Vorrichtung zur Regelung der Lage können dieselben Vorteile erreicht werden, die bereits im Zusammenhang mit dem Verfahren zur Regelung der Lage eines Rotors einer elektrischen Maschine mit zwei getrennten Wicklungssystemen erläutert worden sind. Es können auch die in diesem Zusammenhang beschriebenen vorteilhaften Ausgestaltungen und Merkmale bei dem Verfahren zum Betrieb eines Aktuators und der Regelungseinrichtung zur Anwendung kommen.

Weitere Einzelheiten und Vorteile der Erfindung sollen nachfolgend anhand des in den Zeichnungen dargestellten Ausführungsbeispiels erläutert werden. Hierin zeigt:
- Fig. 1: ein erstes Ausführungsbeispiel eines Steer-By-Wire-Systems mit einem Aktuator, der zwei getrennte Wicklungssysteme umfasst;
- Fig. 2: ein zweites Ausführungsbeispiel eines Steer-By-Wire-Systems mit einem Aktuator, der zwei getrennte Wicklungssysteme umfasst;
- Fig. 3: ein erstes Ausführungsbeispiel einer erfindungsgemäßen Vorrichtung zur Regelung der Lage eines Rotors; und
- Fig. 4: ein zweites Ausführungsbeispiel einer erfindungsgemäßen Vorrichtung zur Regelung der Lage eines Rotors.

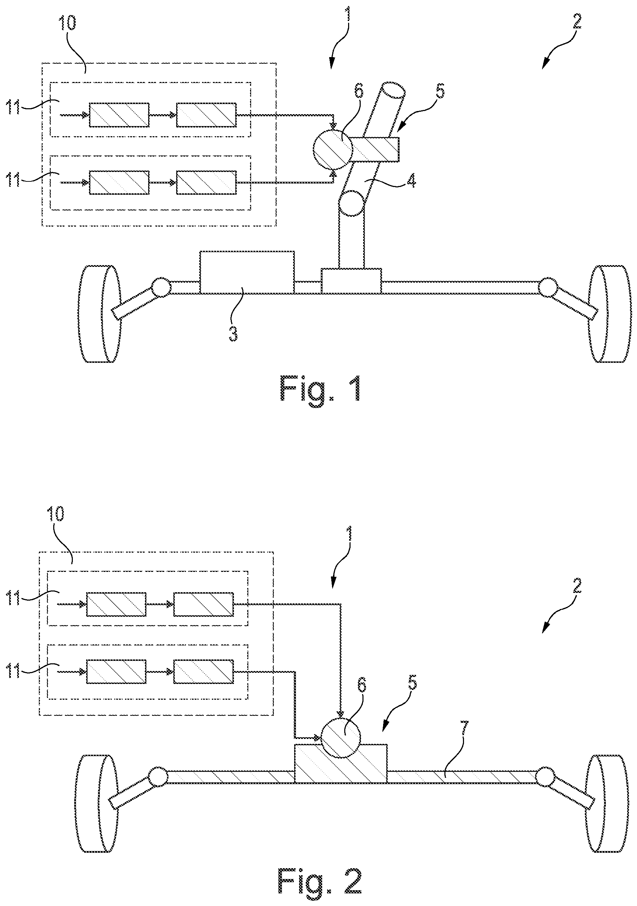

In der Fig. 1 ist ein Steer-By-Wire-System 1 dargestellt, bei welchem die Erfindung Anwendung finden kann. Das Steer-By-Wire System 1 ist als Ergänzungssystem für ein Lenksystem 2, hier ein Lenksystem 2 mit einer Servolenkung 3, ausgestaltet. Das Steer-By-Wire-System 1 umfasst einen an einer Lenksäule 4 des Lenksystems 2 angeordneten Aktuator 5 mit einer elektrischen Maschine 6. Der Aktuator 5 kann als Lenk-Aktuator oder als Feedback-Aktuator ausgestaltet sein. Die elektrische Maschine 6 umfasst dabei mehrere, hier genau zwei, getrennte Wicklungssysteme, die unabhängig voneinander ansteuerbar sind.

Das Steer-By-Wire System 1 umfasst ferner eine erfindungsgemäße Vorrichtung 7 zur Regelung der Lage eines Rotors der elektrischen Maschine 6. Die Vorrichtung 7 ist dazu eingerichtet, die getrennten Wicklungssysteme der elektrischen Maschine 6 anzusteuern. Hierzu umfasst die Vorrichtung 10 mehrere Regelungseinrichtungen 11, wobei jedem Wicklungssystem jeweils eine dieser Regelungseinrichtungen 11 zugeordnet ist.

Die Fig. 2 zeigt ein weiteres Ausführungsbeispiel eines Steer-By-Wire-Systems 1, bei welchem die Erfindung Anwendung finden kann. Das Steer-By-Wire System 1 gemäß dem zweiten Ausführungsbeispiel ist als Lenksystem für eine Achse eines Fahrzeugs ausgebildet, beispielsweise als Vorderachslenksystem oder Hinterachslenksystem. Das Steer-By-Wire-System 1 umfasst einen mit einer Stange 7 gekoppelten Lenk-Aktuator 5 mit einer elektrischen Maschine 6. Die elektrische Maschine 6 umfasst dabei mehrere, hier genau zwei, getrennte Wicklungssysteme, die unabhängig voneinander ansteuerbar sind.

Bei dem Steer-By-Wire System 1 gemäß dem zweiten Ausführungsbeispiel kann ebenfalls eine erfindungsgemäße Vorrichtung 10 zur Regelung der Lage eines Rotors der elektrischen Maschine 6 Anwendung finden. Die Vorrichtung 10 ist dazu eingerichtet, die getrennten Wicklungssysteme der elektrischen Maschine 6 anzusteuern. Hierzu umfasst die Vorrichtung 10 mehrere Regelungseinrichtungen 11, wobei jedem Wicklungssystem jeweils eine dieser Regelungseinrichtungen 11 zugeordnet ist.

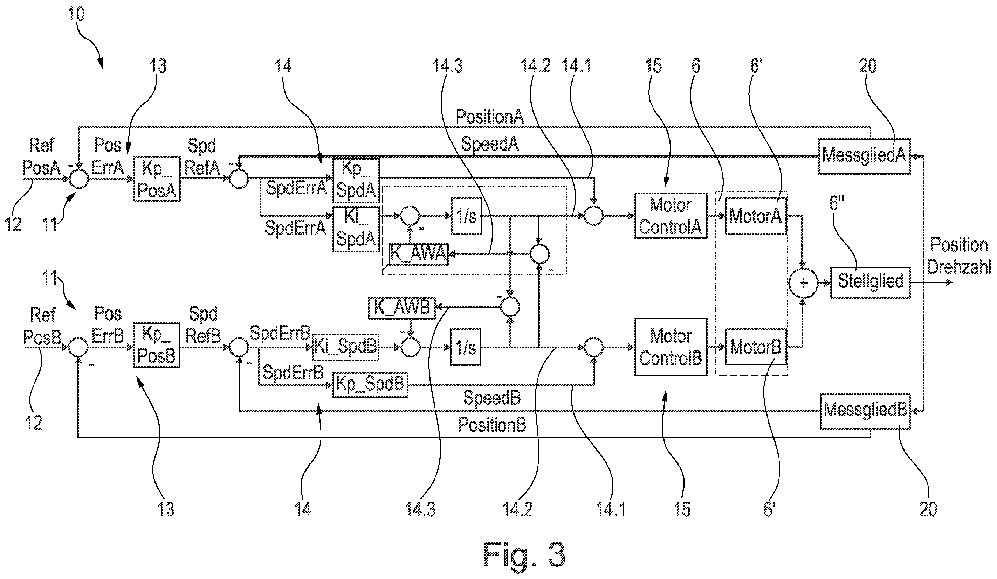

Die Fig. 3 zeigt ein erstes Ausführungsbeispiel einer Vorrichtung 10 zur Regelung der Lage eines Rotors der elektrischen Maschine 6. Die elektrische Maschine umfasst zwei voneinander getrennt ausgebildete Wicklungssysteme, weshalb die elektrische Maschine 6 in Fig. 3 als zwei getrennte Teilmaschinen 6' dargestellt ist. Jede dieser Teilmaschinen 6' umfasst genau ein Wicklungssystem, hier ein dreiphasiges Wicklungssystem. Die Teilmaschinen 2 wirken auf eine gemeinsame Welle bzw. einen gemeinsamen Rotor 6" ein, dessen Lage bzw. Winkelstellung geregelt wird.

Hierzu wird der Vorrichtung 10 jeweils ein Lage-Sollwert 12 vorgegeben, welcher zwei als Kaskadenregelungen ausgebildeten Regelungseinrichtungen 11 zugeführt wird. Jede der Regelungseinrichtungen 11 ist jeweils einem der beiden Wicklungssysteme der elektrischen Maschine 6 zugeordnet, also jeweils einer Teilmaschine 6'. Die Regelungseinrichtungen 11 umfassen einen dreistufigen Aufbau mit einem inneren Strom-Regelkreis 15, einem mittleren Drehzahl-Regelkreis 14 und einem äußeren Lage-Regelkreis 13.

Der innere Strom-Regelkreis 15 regelt die der elektrischen Teilmaschine 6' zugeführten Phasenströme und darüber das Drehmoment der Teilmaschine 6'.

Der mittlere Drehzahl-Regelkreis 14 ist dem inneren Strom-Regelkreis 15 übergeordnet und regelt die Drehzahl der Teilmaschine 6'. Der Drehzahl-Regelkreis 6' umfasst einen als PI-Regler ausgestalteten Drehzahl-Regler, also einen Regler mit proportionalem Anteil (P-Anteil) 14.1 und integrierendem Anteil (I-Anteil) 14.2. Der P-Anteil 14.1 und der I-Anteil 14.2 werden parallel zueinander ermittelt und dann addiert. Aus den I-Anteilen 14.2 der Drehzahlregler 14 beider Regelungseinrichtungen 11 wird jeweils die Differenz 14.3 gebildet, welche als Rückkopplung des I-Anteils verwendet wird. Durch diesen Datenaustausch zwischen den Regelungseinrichtungen 11 wird sichergestellt, dass die Sollwerte der Strom-Regelkreise zwar nicht unbedingt identisch aber zumindest sehr ähnlich sind und kein "torque fighting" entsteht. Als Rückführung wird dem Drehzahl-Regler 14 jeweils eine Ist-Winkelgeschwindigkeit SpeedA, SpeedB zugeführt, die durch einen Sensor 20 bestimmt wird.

Der äußere Lage-Regelkreis 13 ist dem mittleren Drehzahl-Regelkreis 14 übergeordnet und regelt die Lage des Rotors 6" der elektrischen Maschine 6. Hierzu umfasst der Lage-Regelkreis 13 einen Lage-Regler, der als P-Regler ausgestaltet ist und welchem die durch den Sensor 20 ermittelte Lage des Rotors PositionA, PositionB rückgeführt wird.

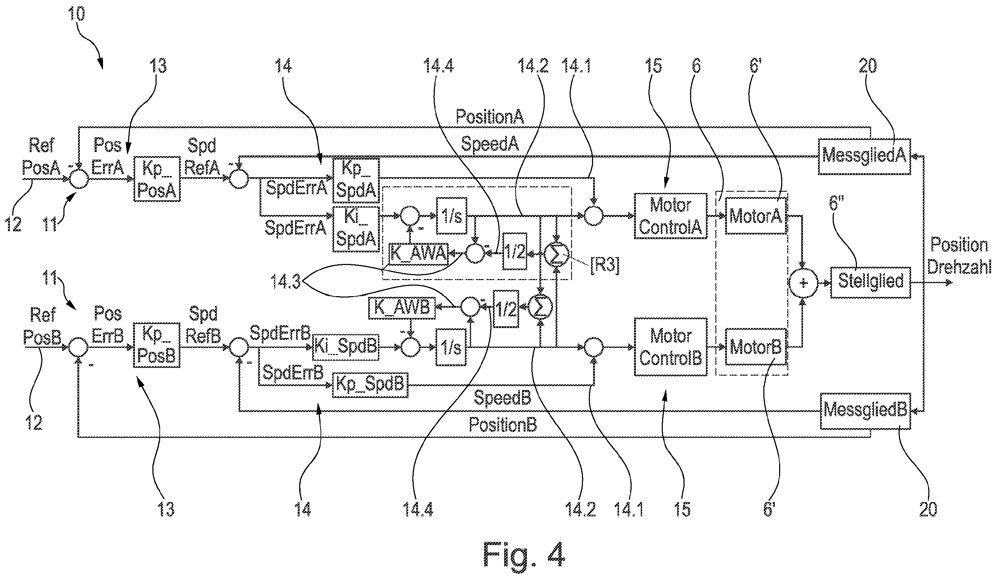

In **Fig. 4** zeigt ein zweites Ausführungsbeispiel einer Vorrichtung 10 zur Regelung der Lage eines Rotors der elektrischen Maschine 6. Die elektrische Maschine umfasst zwei voneinander getrennt ausgebildete Wicklungssysteme, weshalb die elektrische Maschine 6 in Fig. 4 als zwei getrennte Teilmaschinen 6' dargestellt ist. Jede dieser Teilmaschinen 6' umfasst genau ein Wicklungssystem, hier ein dreiphasiges Wicklungssystem. Die Teilmaschinen 2 wirken auf eine gemeinsame Welle bzw. einen gemeinsamen Rotor 6" ein, dessen Lage bzw. Winkelstellung geregelt wird.

Hierzu wird der Vorrichtung 10 jeweils ein Lage-Sollwert 12 vorgegeben, welcher zwei als Kaskadenregelungen ausgebildeten Regelungseinrichtungen 11 zugeführt wird. Jede der Regelungseinrichtungen 11 ist jeweils einem der beiden Wicklungssysteme der elektrischen Maschine 6 zugeordnet, also jeweils einer Teilmaschine 6'. Die Regelungseinrichtungen 11 umfassen einen dreistufigen Aufbau mit einem inneren Strom-Regelkreis 15, einem mittleren Drehzahl-Regelkreis 14 und einem äußeren Lage-Regelkreis 13.

Der innere Strom-Regelkreis 15 regelt die der elektrischen Teilmaschine 6' zugeführten Phasenströme und darüber das Drehmoment der Teilmaschine 6'.

Der mittlere Drehzahl-Regelkreis 14 ist dem inneren Strom-Regelkreis 15 übergeordnet und regelt die Drehzahl der Teilmaschine 6'. Der Drehzahl-Regelkreis 6' umfasst einen als PI-Regler ausgestalteten Drehzahl-Regler, also einen Regler mit proportionalem Anteil (P-Anteil) 14.1 und integrierendem Anteil (I-Anteil) 14.2. Der P-Anteil 14.1 und der I-Anteil 14.2 werden parallel zueinander ermittelt und dann addiert. Anhand der I-Anteile 14.2 der Drehzahlregler 14 beider Regelungseinrichtungen 11 wird der (arithmetische) Mittelwert 14.4 der I-Anteile 14.2 gebildet. Der Mittelwert 14.4 wird herangezogen, um eine Differenz 14.3 des I-Anteils 14.2 des jeweiligen Drehzahl-Regelkreises 14 minus des Mittelwerts 14.4 zu bilden. Diese Differenz 14.3 wird als Rückkopplung des I-Anteils 14.2 verwendet. Im vorliegenden Fall sind genau zwei Regelungseinrichtungen 11 vorgesehen und der Mittelwert 14.4 der I-Anteile 14.2 beider Regelungseinrichtungen 11 wird gebildet, in dem die Summe der I-Anteile 14.2 durch die Anzahl der Regelungseinrichtungen 11, also durch zwei, geteilt wird.

Abweichend von den vorstehend erläuterten Ausführungsbeispielen kann der Rotor 6" der elektrischen Maschine mit einem Aktorelement gekoppelt sein, beispielsweise über ein Getriebe. Bei einer solchen Ausgestaltung mit einem Aktorelement kann der dem mittleren Drehzahl-Regelkreis 14 übergeordnete äußeren Lage-Regelkreis 13 die Lage des mit dem Rotor 6" der elektrischen Maschine 6 gekoppelten Aktorelements regeln. In diesem Fall regelt das erfindungsgemäße Verfahren unmittelbar die Lage des Aktorelements und mittelbar die Lage des Rotors 6" der elektrischen Maschine 6.

Die vorstehend erläuterte Vorrichtung 10 und das mit dieser implementierte Verfahren zur Regelung der Lage des Rotors 6" der elektrischen Maschine 6 mit zwei getrennten Wicklungssystemen kann zum Betrieb eines Aktuators eines Steer-By-Wire-Systems Anwendung finden. Insbesondere kann ein Feedback-Aktuator oder eine Lenk-Aktuator eines solchen Steer-by-Wire-Systems geregelt werden. Die Erfindung ermöglicht eine größere Verfügbarkeit der elektrischen Maschine 6.

## Patentansprüche

1. Verfahren zur Regelung der Lage eines Rotors (6") einer elektrischen Maschine (6) mit mindestens zwei getrennten Wicklungssystemen, wobei jedes der Wicklungssysteme durch eine dem jeweiligen Wicklungssystem zugeordnete Regelungseinrichtung (11) geregelt wird, wobei jede der Regelungseinrichtungen (11) einen Drehzahl-Regelkreis (14) umfasst, der eine Drehzahl der elektrischen Maschine (6) regelt, wobei der jeweilige Drehzahl-Regelkreis (14) einen Drehzahl-Regler mit einem P-Anteil (14.1) und einem I-Anteil (14.2) aufweist **dadurch gekennzeichnet, dass**, die Drehzahl-Regelkreise (14) der Regelungseinrichtungen (11) untereinander eine Information betreffend den I-Anteil (14.2) austauschen, und betreffend den P-Anteil (14.1) keine Information austauschen.

2. Verfahren nach Anspruch 1, **dadurch gekennzeichnet, dass** der P-Anteil (14.1) und der I-Anteil (14.2) jedes Drehzahl-Regelkreises (14) parallel gebildet und dann addiert werden.

3. Verfahren nach einem der vorhergehenden Ansprüche, **dadurch gekennzeichnet, dass** in dem Drehzahl-Regelkreis (14) eine Differenz (14.3) der I-Anteile (14.2) mehrerer Regelungseinrichtungen (11) gebildet wird, wobei die Differenz (14.3) als Rückkopplung des I-Anteils (14.2) verwendet wird.

4. Verfahren nach einem der Ansprüche 1 oder 2, **dadurch gekennzeichnet, dass** in dem Drehzahl-Regelkreis (14) ein Mittelwert (14.4) der I-Anteile (14.2) mehrerer Regelungseinrichtungen (11) gebildet wird, wobei eine Differenz (14.3) des I-Anteils (14.2) des jeweiligen Drehzahl-Regelkreises (14) minus des gebildeten Mittelwerts (14.4) als Rückkopplung des I-Anteils (14.2) verwendet wird.

5. Verfahren nach einem der vorhergehenden Ansprüche, **dadurch gekennzeichnet, dass** jede der Regelungseinrichtungen (11) einen dem Drehzahl-Regelkreis (14) übergeordneten Lage-Regelkreis (13) umfasst, der die Lage des Rotors (6") der elektrischen Maschine (6) regelt.

6. Verfahren nach einem der vorhergehenden Ansprüche, **dadurch gekennzeichnet, dass** jede der Regelungseinrichtungen (11) einen Strom-Regelkreis (15) umfasst, der einen Strom der elektrischen Maschine (6) regelt.

7. Verfahren zum Betrieb eines Aktuators eines Steer-By-Wire-Systems, insbesondere eines Feedback-Aktuators oder eines Lenk-Aktuators, der eine elektrischen Maschine (6) mit mindestens zwei getrennten Wicklungssystemen umfasst, wobei eine Lage eines Rotors (6") der elektrischen Maschine (6) nach einem Verfahren gemäß einem der vorstehenden Ansprüche eingestellt wird.

8. Verfahren nach Anspruch 7, wobei die elektrische Maschine (6) eine permanenterregte Synchronmaschine oder eine Reluktanzmaschine ist.

9. Vorrichtung zur Regelung der Lage eines Rotors (6") einer elektrischen Maschine (6) mit mindestens zwei getrennten Wicklungssystemen, wobei jedes der Wicklungssysteme durch eine dem jeweiligen Wicklungssystem zugeordnete Regelungseinrichtung (11) regelbar ist, wobei jede der Regelungseinrichtungen (11) einen Drehzahl-Regelkreis (14) umfasst, durch den eine Drehzahl der elektrischen Maschine (6) regelbar ist, wobei der jeweilige Drehzahl-Regelkreis (14) einen Drehzahl-Regler mit einem P-Anteil (14.1) und einem I-Anteil (14.2) aufweist **dadurch gekennzeichnet, dass** die Regelungseinrichtungen (11) über eine Kommunikationsverbindung gekoppelt sind, die dazu eingerichtet ist, dass die Drehzahl-Regelkreise (14) der Regelungseinrichtungen (11) untereinander eine Information betreffend den I-Anteil (14.2) austauschen, und betreffend den P-Anteil (14.1) keine Information austauschen.

## Claims

1. Method for controlling the position of a rotor (6") of an electric machine (6) having at least two separate winding systems, wherein each of the winding systems is controlled by a control device (11) assigned to the respective winding system, wherein each of the control devices (11) comprises a speed control loop (14) which controls a speed of the electric machine (6), wherein the respective speed control loop (14) has a speed controller having a P component (14.1) and an I component (14.2), **characterized in that** the speed control loops (14) of the control devices (11) exchange information relating to the I component (14.2) with one another, and do not exchange any information relating to the P component (14.1).

2. Method according to Claim 1, **characterized in that** the P component (14.1) and the I component (14.2) of each speed control loop (14) are formed in parallel and then added.

3. Method according to one of the preceding claims, **characterized in that** a difference (14.3) in the I components (14.2) of a number of control devices (11) is formed in the speed control loop (14), wherein the difference (14.3) is used as feedback of the I component (14.2).

4. Method according to either of Claims 1 and 2, **characterized in that** a mean value (14.4) of the I components (14.2) of a number of control devices (11) is formed in the speed control loop (14), wherein a difference (14.3) in the I component (14.2) of the respective speed control loop (14) minus the formed mean value (14.4) is used as feedback of the I component (14.2).

5. Method according to one of the preceding claims, **characterized in that** each of the control devices (11) comprises a position control loop (13) which is superordinate to the speed control loop (14) and which controls the position of the rotor (6") of the electric machine (6).

6. Method according to one of the preceding claims, **characterized in that** each of the control devices (11) comprises a current control loop (15) which controls a current of the electric machine (6).

7. Method for operating an actuator of a steer-by-wire system, in particular a feedback actuator or a steering actuator, which comprises an electric machine (6) having at least two separate winding systems, wherein a position of a rotor (6") of the electric machine (6) is set by a method according to one of the preceding claims.

8. Method according to Claim 7, wherein the electric machine (6) is a permanently excited synchronous machine or a reluctance machine.

9. Device for controlling the position of a rotor (6") of an electric machine (6) having at least two separate winding systems, wherein each of the winding systems can be controlled by a control device (11) assigned to the respective winding system, wherein each of the control devices (11) comprises a speed control loop (14) by means of which a speed of the electric machine (6) can be controlled, wherein the respective speed control loop (14) has a speed controller having a P component (14.1) and an I component (14.2), **characterized in that** the control devices (11) are coupled via a communication connection which is configured such that the speed control loops (14) of the control devices (11) exchange information relating to the I component (14.2) with one another, and do not exchange any information relating to the P component (14.1).

## Revendications

1. Procédé permettant de réguler la position d'un rotor (6") d'une machine électrique (6) comprenant au moins deux systèmes d'enroulement séparés, dans lequel chacun des systèmes d'enroulement est régulé par un dispositif de régulation (11) associé au système d'enroulement respectif, dans lequel chacun des dispositifs de régulation (11) comprend un circuit de régulation de vitesse de rotation (14) qui régule une vitesse de rotation de la machine électrique (6), dans lequel le circuit de régulation de vitesse de rotation respectif (14) présente un régulateur de vitesse de rotation ayant un terme proportionnel P (14.1) et un terme proportionnel I (14.2), **caractérisé en ce que** les circuits de régulation de vitesse de rotation (14) des dispositifs de régulation (11) échangent entre eux une information concernant le terme proportionnel I (14.2) et n'échangent pas d'informations concernant le terme proportionnel P (14.1).

2. Procédé selon la revendication 1, **caractérisé en ce que** le terme proportionnel P (14.1) et le terme proportionnel I (14.2) de chaque circuit de régulation de vitesse de rotation (14) sont formés en parallèle et ensuite additionnés.

3. Procédé selon l'une quelconque des revendications précédentes, **caractérisé en ce que** dans le circuit de régulation de vitesse de rotation (14), une différence (14.3) des termes proportionnels I (14.2) de plusieurs dispositifs de régulation (11) est formée, la différence (14.3) étant utilisée comme une rétroaction du terme proportionnel I (14.2).

4. Procédé selon l'une quelconque des revendications 1 ou 2, **caractérisé en ce que** dans le circuit de régulation de vitesse de rotation (14), une moyenne (14.4) des termes proportionnels I (14.2) de plusieurs dispositifs de régulation (11) est formée, une différence (14.3) du terme proportionnel I (14.2) du circuit de régulation de vitesse de rotation (14) respectif moins la moyenne formée (14.4) est utilisée comme une rétroaction du terme proportionnel I (14.2).

5. Procédé selon l'une quelconque des revendications précédentes, **caractérisé en ce que** chacun des dispositifs de régulation (11) comprend un circuit de régulation de position (13) d'ordre supérieur au circuit de régulation de vitesse de rotation (14), qui régule la position du rotor (6") de la machine électrique (6).

6. Procédé selon l'une quelconque des revendications précédentes, **caractérisé en ce que** chacun des dispositifs de régulation (11) comprend un circuit de régulation de courant (15) qui régule un courant de la machine électrique (6).

7. Procédé permettant de faire fonctionner un actionneur d'un système de direction par commande électronique, en particulier un actionneur à rétroaction ou un actionneur de direction, qui comprend une machine électrique (6) comprenant au moins deux systèmes d'enroulement séparés, dans lequel une position d'un rotor (6") de la machine électrique (6) est réglée selon l'une quelconque des revendications précédentes.

8. Procédé selon la revendication 7, dans lequel la machine électrique (6) est une machine synchrone excitée par aimant permanent ou une machine à réluctance.

9. Dispositif permettant de réguler la position d'un rotor (6") d'une machine électrique (6) comprenant au moins deux systèmes d'enroulement séparés, dans lequel chacun des systèmes d'enroulement peut être régulé par un dispositif de régulation (11) associé au système d'enroulement respectif, dans lequel chacun des dispositifs de régulation (11) comprend un circuit de régulation de vitesse de rotation (14) qui permet de réguler une vitesse de rotation de la machine électrique (6), dans lequel le circuit de régulation de vitesse de rotation (14) respectif présente un régulateur de vitesse de rotation ayant un terme proportionnel P (14.1) et un terme proportionnel I (14.2), **caractérisé en ce que** les dispositifs de régulation (11) sont couplé par une liaison de communication qui est conçue pour que les circuits de régulation de vitesse de rotation (14) des dispositifs de régulation (11) échangent entre eux une information concernant le terme proportionnel I (14.2) et n'échangent pas d'informations concernant le terme proportionnel P (14.1).
